Europäisches Patentamt

European Patent Office

Office européen des brevets

(19)

(11) Veröffentlichungsnummer: **0 029 110**
**B1**

# (12) EUROPÄISCHE PATENTSCHRIFT

(45) Veröffentlichungstag der Patentschrift:
25.01.84

(51) Int. Cl.³: **F 16 K 1/22**

(21) Anmeldenummer: 80106107.8

(22) Anmeldetag: 08.10.80

(54) **Doppelexzentrische Absperrklappe.**

(30) Priorität: 14.11.79 DE 2945963

(43) Veröffentlichungstag der Anmeldung:
27.05.81 Patentblatt 81/21

(45) Bekanntmachung des Hinweises auf die Patenterteilung:
25.01.84 Patentblatt 84/4

(84) Benannte Vertragsstaaten:
AT BE CH DE FR GB IT LI LU NL SE

(56) Entgegenhaltungen:
DE - A - 2 023 960
DE - A - 2 023 961
DE - A - 2 724 007
DE - A - 2 810 149
DE - C - 517 642
FR - A - 2 253 958
US - A - 2 750 955
US - A - 2 805 837
US - A - 2 980 388

(73) Patentinhaber: Behrens, Helmut, Alte Markstrasse 34,
D-4630 Bochum (DE)

(72) Erfinder: Behrens, Helmut, Alte Markstrasse 34,
D-4630 Bochum (DE)

(74) Vertreter: Niemann, Uwe, Dr.-Ing., Ahornstrasse 41,
D-4300 Essen 1 (DE)

ACTORUM AG

## Doppelexzentrische Absperrklappe

Die Erfindung betrifft eine Absperrklappe mit einem Gehäuse und darin doppelt exzentrisch gelagerter Klappenscheibe, die auf der der Schwenkachse zugewandten Seite eine sich parallel an der Schwenkachse über die ganze Breite mit gleichem Längsquerschnitt erstreckende Überhöhung aufweist und deren Umfang als Dichtfläche ausgebildet ist, die mit einer zugeordneten Dichtfläche des Gehäuses — insbesondere metallisch — abdichtet, wobei die Dichtfläche des Gehäuses auf dem Mantel eines Kegels mit zur Gehäuseachse koaxialer Kegelachse angeordnet ist und das Gehäuse zur Lagerung der Klappenscheibe zwei zur Schwenkachse konzentrisch zylindrische Ausnehmungen für darin drehbar angeordnete Wellenenden aufweist, an denen die Klappenscheibe befestigt ist.

Derartige Absperrklappen sind aus der Praxis bekannt. Sie können mit einem Stelltrieb versehen sein und werden dann als Absperr- oder Regelklappen eingesetzt. Derartige Absperrklappen können aber auch ohne Stelltrieb als Rückschlagklappen eingesetzt werden, bei denen sich die Klappenscheibe nach Massgabe der Strömungsverhältnisse selbsttätig einstellt.

Absperrklappen der beschriebenen Gattung (DE-A-2 023 960) sind herstellungstechnisch deswegen besonders günstig, weil die Dichtflächen den Mantel eines abgestumpften Kreiskegels bilden und deswegen auch mit einfachen Maschinen ohne weiteres bearbeitet werden können.

Um eine optimale Dichtwirkung zwischen den einander zugeordneten Dichtflächen zu erreichen, müssen bestimmte geometrische Verhältnisse zwischen einerseits dem Kegelwinkel und andererseits der Lage der Schwenkachse zu den Dichtflächen eingehalten werden. Von der Lage der Schwenkachse hängt aber auch die Lage der vollständig geöffneten Klappenscheibe ab, wenn diese sich im wesentlichen parallel zur Strömungsrichtung erstreckt.

Aus strömungstechnischen Gründen ist es wünschenswert, wenn die vollständig geöffnete Klappenscheibe sich im Bereich der Gehäusemitte bzw. des darin gebildeten Strömungskanals befindet. Das lässt sich jedoch bei bekannten Absperrklappen nicht oder nicht ohne wesentliche Vergrösserung des Strömungswiderstandes der Klappenscheibe selbst erreichen, weil dann die Überhöhung der Klappenscheibe so gross werden müsste, dass bei vollständig geöffneter Klappenscheibe der Strömungsquerschnitt des Strömungskanals im Gehäuse wesentlich eingeschränkt wird.

Die Überhöhung der Klappenscheibe wird in der Regel so ausgeführt, dass die Klappenscheibe einen profilähnlichen Querschnitt mit geringem Strömungswiderstand erhält. Gegebenenfalls kann die Überhöhung auch so gestaltet sein, dass die Klappenscheibe bei einem bestimmten Anstellwinkel zur Strömung schwingungsfrei in stabiler Lage bleibt. Die Überhöhung soll aber auch die statischen Verhältnisse der Klappenscheibe verbessern, damit diese insbesondere in geschlossenem Zustand den Strömungsdruck aufnehmen kann. Die Überhöhung beeinflusst auch die Gewichtsverteilung der Klappenscheibe im Hinblick auf die Schwenkachse, und diese Gewichtsverteilung ist wiederum funktionell von Bedeutung, wenn die Absperrklappe als Rückschlagklappe eingesetzt ist. Schliesslich dient die Überhöhung auch zur Befestigung der Klappenscheibe an den Wellenenden oder an einer durchgehenden Welle, wobei die Wellenenden oder die Welle in der Überhöhung geführt und darin befestigt sind.

Wollte man eine bekannte Absperrklappe so ausbilden, dass die geöffnete Klappenscheibe sich im wesentlichen in der Mitte des Strömungskanals erstreckt, dann müsste die Schwenkachse in verhältnismässig grosser Entfernung von der Gehäuseachse angeordnet sein, wobei jedoch mit Rücksicht auf die vorgegebenen und die Dichtwirkung bestimmenden geometrischen Verhältnisse nur ein beschränkter Bereich für die Anordnung der Schwenkachse zur Verfügung steht. Man erhält dann aber eine sehr starke Überhöhung der Klappenscheibe, die damit einen sehr grossen Strömungswiderstand besitzt und den Strömungsquerschnitt im Strömungskanal des Gehäuses erheblich einschränkt. Gleichzeitig wird auch die Schwerpunktlage der Klappenscheibe ungünstig beeinflusst, so dass es erforderlich werden kann, an einem sich durch das Gehäuse erstreckenden Wellenende Ausgleichsgewichte anzubringen.

Eine andere bekannte Absperrklappe vermeidet diese Nachteile dadurch, dass die Dichtflächen des Gehäuses nicht mehr auf dem Mantel eines Kegels mit zur Gehäuseachse koaxialer Kegelachse angeordnet sind, sondern auf dem Mantel eines Kegels, dessen Kegelachse unter einem Winkel zur Gehäuseachse steht. Dann werden die Dichtflächen des Gehäuses und der Klappenscheibe aber elliptisch und können nicht mehr mit einfachen Maschinen bearbeitet werden. Ausserdem nimmt die Klappenscheibe in geschlossenem Zustand eine Lage ein, bei der sie unter einem Winkel zur Gehäuseachse steht (US-A-2 805 837).

Aufgabe der Erfindung ist es, eine Absperrklappe der eingangs beschriebenen Gattung so zu verbessern, dass die Lage der Schwenkachse und die Form der Klappenscheibe unabhängig voneinander vorgegeben werden können.

Diese Aufgabe wird dadurch gelöst, dass der halbe Durchmesser der Wellenenden grösser ist als die maximale Überhöhung der Klappenscheibe im Bereich der Schwenkachse, dass die Schwenkachse ausserhalb der Überhöhung der Klappenscheibe verläuft und dass jedes Wellenende zur exzentrischen Befestigung der Klappenscheibe an seiner ins Gehäuseinnere weisenden Stirnseite einen zur Schwenkachse exzentrischen Zapfen trägt, der in eine zugeordnete Ausnehmung der Klappenscheibe eingreift.

Bei der erfindungsgemässen Absperrklappe sind die Lage der Schwenkachse einerseits und die Form der Klappenscheibe andererseits funktionell gleichsam entkoppelt, so dass die Lage der Schwenkachse nach Massgabe der gewünschten Dichtwirkung und Dichtkräfte einerseits sowie nach Massgabe der gewünschten Lage der Klappenscheibe in Offenstellung andererseits frei gewählt werden kann, während die Form der Klappenscheibe im Hinblick auf geringen Strömungswiderstand, Festigkeit und Schwerpunktlage ausgewählt werden kann.

Man kann folglich unabhängig von den jeweils gewünschten Dichtungsverhältnissen und der gewünschten Lage in Offenstellung der Klappenscheibe eine verhältnismässig dünne Klappenscheibe einsetzen, die bei hinreichender Festigkeit strömungsgünstig gestaltet ist und die bei vollständig geöffneter Stellung den Querschnitt des Strömungskanals nicht oder nur unwesentlich verkleinert. Die Gewichtsverteilung und damit die Schwerpunktlage der Klappenscheibe kann so eingerichtet werden, dass bei Einsatz der Absperrklappe als Rückschlagklappe eine hinreichende Eigendämpfung der Klappenscheibe vorhanden ist und dass die Klappenscheibe auch bei geringen Strömungsgeschwindigkeiten noch zuverlässig arbeitet. Die Lage der Schwenkachse, durch die die Dichtungsverhältnisse sowie die Lage der Schwenkklappe in Offenstellung bestimmt werden, kann unabhängig von der Form der Klappenscheibe im Rahmen der vorgegebenen geometrischen Verhältnisse gewählt werden.

Es versteht sich, dass die erfindungsgemässe Absperrklappe auch mit halbmetallischen oder weichen Dichtungen ausgerüstet sein kann, ohne dass sich an den angegebenen Verhältnissen etwas ändert.

Die Wellenenden können abgedichtet in ihren Ausnehmungen gelagert sein, wobei gegebenenfalls auch Ausführungen möglich sind, bei der die Klappenscheibe und ihre Lagerung von innen im Gehäuse montiert werden können, so dass ein aussen vollständig geschlossenes Gehäuse vorhanden ist.

Soll die Absperrklappe mit einem Stelltrieb versehen werden, dann empfiehlt sich eine Ausführungsform, bei der ein Wellenende in einer gehäuseaussenseitig geschlossenen Ausnehmung und das andere, mit einem zur Schwenkachse koaxialen Anschlusszapfen oder dergleichen versehene Wellenende in einer durchgehenden Ausnehmung gelagert ist. Der Stelltrieb kann dann an dem Anschlusszapfen oder dergleichen angreifen.

Im folgenden wird ein in der Zeichnung dargestelltes Ausführungsbeispiel der Erfindung erläutert; es zeigen:

Fig. 1 einen Längsschnitt durch eine doppelt exzentrische Absperrklappe (als Schnitt in Richtung II-II durch den Gegenstand nach Fig. 2),

Fig. 2 einen Schnitt in Richtung I-I durch den Gegenstand nach Fig. 1.

Die in den Figuren dargestellte Absperrklappe weist ein Gehäuse 1 mit Anschlussflanschen 2, 3 auf. Das Gehäuse 1 umschliesst einen zur Gehäuseachse 4 konzentrischen Strömungskanal 5, in den eine durchgehend umlaufende Dichtfläche 6 ragt. Die Dichtfläche 6 wird vom Mantel eines abgestumpften Kegels mit zur Gehäuseachse 4 koaxialer Kegelachse gebildet. Beim dargestellten Ausführungsbeispiel handelt es sich um eine metallische Dichtfläche 6.

Im Strömungskanal 5 ist eine Klappenscheibe 7 um eine zur Gehäuseachse 4 orthogonale Schwenkachse 8 schwenkbar gelagert. Der Umfang der Klappenscheibe 7 ist als Dichtfläche 9 ausgebildet, die mit der Dichtfläche 6 des Gehäuses 1 zusammenarbeitet. Dementsprechend wird die Dichtfläche 9 von dem Mantel eines Kegelstumpfes gebildet, der den gleichen Kegelwinkel wie der Kegel der Dichtfläche 6 besitzt.

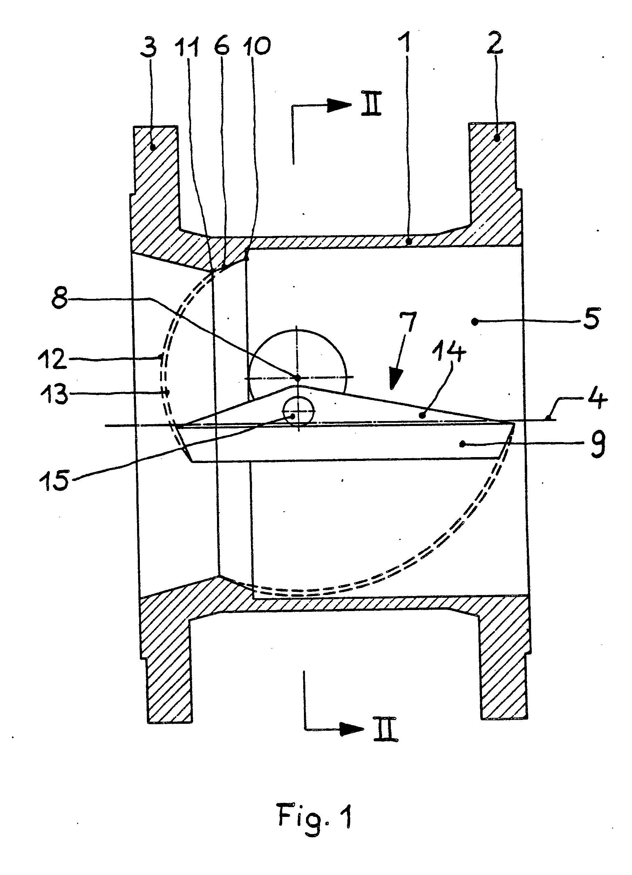

Um ein reibungsfreies Anlegen und Abheben der Dichtflächen 6 bzw. 9 zu gewährleisten, ist die Schwenkachse 8 einerseits exzentrisch zur Gehäuseachse 4 und andererseits exzentrisch zur Klappenscheibe 7 so angeordnet, dass bei der in Figur 1 dargestellten Projektion oberhalb der Gehäuseachse 4 der Abstand der Schwenkachse 8 von der der Schwenkachse 8 benachbarten Kante 10 der Dichtfläche 6 bzw. der Dichtfläche 9 kleiner ist als der Abstand der Schwenkachse 8 von der entfernteren Kante 11. Unterhalb der Gehäuseachse 4 sind die Verhältnisse umgekehrt. Dementsprechend bewegen sich beim Verschwenken der Klappenscheibe 7 die Kanten der Dichtfläche 9 längs der gestrichelt gezeichneten Linien 12 bzw. 13. Um eine gleichmässige Dichtwirkung zu erzeugen, muss der Abstand der Linien 12, 13 an bezüglich des Mittelpunktes der Klappenscheibe 7 einander diametral gegenüberliegenden Abschnitten jeweils gleich sein.

Die Klappenscheibe 7 weist auf der der Schwenkachse 8 zugewandten Seite eine Überhöhung 14 auf, die sich parallel zur Schwenkachse 8 über die gesamte Breite der Klappenscheibe 7 erstreckt und die so ausgebildet ist, dass die Klappenscheibe 7, wenn sie sich in der in Figur 1 dargestellten, vollständig geöffneten Stellung befindet, einen möglichst geringen Strömungswiderstand besitzt und den Querschnitt des Strömungskanals nicht oder nur unerheblich einschränkt.

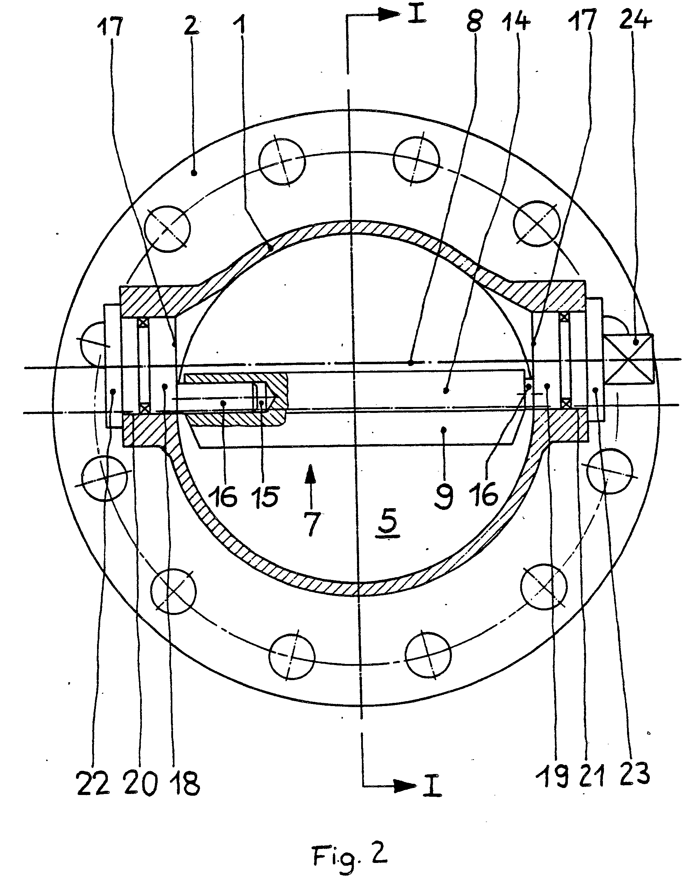

Die Überhöhung 14 weist an gegenüberliegenden Seiten jeweils eine Ausnehmung 15 für einen darin angeordneten und in an sich bekannter Weise befestigten Zapfen 16 auf. Dieser Zapfen 16 ist exzentrisch an der dem Strömungskanal 5 zugewandten Stirnseite 17 eines Wellenendes 18 bzw. 19 angeordnet. Die Wellenenden 18 bzw. 19 sind in zugeordneten Lagerausnehmungen 20 bzw. 21 des Gehäuses 1 in an sich bekannter Weise abgedichtet gelagert. Die Lagerausnehmungen 20 bzw. 21 sind konzentrisch zur Schwenkachse 8 und durchgehend. Die Lagerausnehmung 20 auf der linken Seite der Figur 2 ist aussen mit einem am Gehäuse 1 befestigten Deckel 22 abgedeckt, der auch ein Widerlager für das Wellenende 18 bildet. Auf der Aussenseite der Lagerausnehmung 21 ist am Gehäuse 1 ebenfalls ein Deckel 23 befestigt, jedoch mit einem Durchlass für einen mit dem Wellenende 19 verbundenen und konzentrisch dazu angeordneten Anschlusszapfen 24. An den Anschlusszapfen 24 kann ein Stelltrieb oder gegebenenfalls auch ein Gewichtsausgleich angeschlossen werden. Die Stirnseiten 17 der Wellenenden 18 bzw. 19 ragen nicht in den Strömungskanal 5 hinein, sondern schliessen einseitig tangential an die den Strömungskanal 5 begrenzende Gehäusewandung an.

Wie man der Zeichnung entnimmt, ist der Durchmesser der Wellenenden 18 bzw. 19 erheblich grösser als die maximale Überhöhung 14 der Klappenscheibe 7 im Bereich der Schwenkachse 8, und ist die Klappenscheibe 7 exzentrisch an den Wellenenden 18 und 19 derart befestigt, dass die Schwenkachse 8 ausserhalb der Klappenscheibe 7 verläuft. Diese Anordnung ermöglicht es, die Lage der Schwenkachse 8 relativ zu den Dichtflächen 6 bzw. 9 einerseits und zur Gehäuseachse 4 andererseits so zu wählen, dass bei reibungsfreiem Anlegen bzw. Abheben der Dichtflächen 6, 9 sowohl eine optimale Dichtwirkung selbst bei metallischer Dichtung zwischen den Dichtflächen 3 und 6 erreicht werden kann als auch eine Offenstellung der Klappenscheibe 7, bei der sich diese im wesentlichen in der Mitte des Strömungskanals 5, also beidseits der Gehäuseachse 4, parallel zur Strömung erstreckt. Unabhängig davon kann die Form der Klappenscheibe 7 im Hinblick auf strömungsgünstigen Widerstand, Festigkeit und Schwerpunktlage gewählt werden.

Wenn die dargestellte Absperrklappe als Regel- oder Stellklappe eingesetzt wird, kann eine Schwerpunktlage gewählt werden, bei der die Gewichtskräfte über den Schwenkweg der Klappenscheibe 7 weitgehend ausgeglichen sind. Wenn die Absperrklappe als Rückschlagklappe, insbesondere in vertikaler Anordnung, eingesetzt wird, dann lässt sich die Gewichtsverteilung der Klappenscheibe 7 auch so einrichten, dass diese eine hinreichende Eigendämpfung besitzt.

## Patentansprüche

1. Absperrklappe mit einem Gehäuse (1) und darin doppelt exzentrisch gelagerter Klappenscheibe (7), die auf der der Schwenkachse (8) zugewandten Seite eine sich parallel an der Schwenkachse (8) über die ganze Breite mit gleichem Längsquerschnitt erstreckende Überhöhung (14) aufweist und deren Umfang als Dichtfläche (9) ausgebildet ist, die mit einer zugeordneten Dichtfläche (6) des Gehäuses — insbesondere metallisch — abdichtet, wobei die Dichtfläche (6) des Gehäuses auf dem Mantel eines Kegels mit zur Gehäuseachse (4) koaxialer Kegelachse angeordnet ist und das Gehäuse zur Lagerung der Klappenscheibe (7) zwei zur Schwenkachse konzentrische zylindrische Ausnehmungen (20, 21) für darin drehbar angeordnete Wellenenden (18, 19) aufweist, an denen die Klappenscheibe befestigt ist, dadurch gekennzeichnet, dass der halbe Durchmesser der Wellenenden (18, 19) grösser ist als die maximale Überhöhung (14) der Klappenscheibe (7) im Bereich der Schwenkachse, dass die Schwenkachse (8) ausserhalb der Überhöhung der Klappenscheibe (7) verläuft und dass jedes Wellenende (18, 19) zur exzentrischen Befestigung der Klappenscheibe (7) an seiner ins Gehäuseinnere (5) weisenden Stirnseite (17) einen zur Schwenkachse (8) exzentrischen Zapfen (16) trägt, der in eine zugeordnete Ausnehmung (15) der Klappenscheibe (7) eingreift.

2. Absperrklappe nach Anspruch 1, dadurch gekennzeichnet, dass die Wellenenden (18, 19) abgedichtet in ihren Ausnehmungen (20, 21) gelagert sind.

3. Absperrklappe nach Anspruch 1 oder 2, dadurch gekennzeichnet, dass ein Wellenende (18) in einer gehäuseaussenseitig geschlossenen Ausnehmung (20) und das andere, mit einem zur Schwenkachse (8) koaxialen Anschlusszapfen (24) oder dergleichen versehene Wellenende (19) in einer durchgehenden Ausnehmung (21) gelagert ist.

## Claims

1. A shutting flap with a case (1) and in there a double-eccentric flap disc (7) which has a camber (14) on its side facing the swivelling axis (8) and extending through the total width in parallel with the swivelling axis (8) with constant longitudinal section, the circumference of which is modeled as a sealing surface (9) to perform sealing action in conjunction with an associated sealing surface (6) of the case — in particular metallic — the sealing surface (6) of the case being arranged on the generator of a cone with the cone axis being co-axial with the case axis (4) and the case having two cylindrical recesses (20, 21) which are concentric with the swivelling axis for pivoting the flap disc (7) for rotatable arrangement of the shaft ends (18, 19) in there on which the flap disc is mounted, characterized in that half of the diameter of the shaft ends (18, 19) is larger than the maximum camber (14) of the flap disc (7) within the range of the swivelling axis, that the swivelling axis (8) runs outside the camber of the flap disc (7), and that for eccentric mounting of the flap disc (7) each shaft end (18, 19) is provided at its face (17) directing to the inside of the case with a journal (16) which is eccentric with the swivelling axis (8), the journal engaging an associated recess (15) of the flap disc (7).

2. A shutter flap according to claim 1, characterized in that the shaft ends (18, 19) are pivoted and sealed in their recesses (20, 21).

3. A shutting flap according to claim 1 or 2, characterized in that one shaft end (18) is pivoted in a recess (20) which is closed outside of the case and the other shaft end (19) is provided with a connection journal (24) or the like, which is concentric with the swivelling axis, and which is pivoted in a through recess (21).

## Revendications

1. Vanne papillon comportant un corps (1) et un papillon (7) monté dans celui-ci avec double excentricité, qui présente, du côté tourné vers l'axe de pivotement, une saillie (14) s'étendant parallèlement à l'axe de pivotement (8) sur toute la largeur avec une même section longitudinale, et dont la circonférence constitue une surface d'étanchéité (9), qui assure une étanchéité — en particulier métallique — avec une surface d'étanchéité correspondante (6) du corps, la surface d'étanchéité (6) du corps étant disposée sur la surface latérale d'un cône dont l'axe est coaxial à l'axe (4) du corps et le corps présentant, pour le montage du papillon (7), deux évidements cylindriques (20, 21) concentriques à l'axe de pivotement pour les extrémités d'arbre (18, 19), qui y sont disposées de manière à pouvoir tourner, et auxquelles le papillon est fixé, caractérisé en ce que le rayon des extrémités d'arbre est plus grand que la saillie maximale (14) du papillon (7) dans la région de l'axe de pivotement, en ce que l'axe de pivotement (8) est situé à l'extérieur de la saillie du papillon (7), et en ce que chaque extrémité d'arbre (18, 19) porte, à son côté frontal (17) tourné vers l'intérieur (5) du corps, pour la fixation excentrique du papillon (7), un tourillon (16), excentrique par rapport à l'axe de pivotement (8), et qui s'engage dans un évidement correspondant (15) du papillon (7).

2. Vanne papillon selon la revendication 1, caractérisée en ce que les extrémités d'arbre (18, 19) sont montées de façon étanche dans leurs évidements (20, 21).

3. Vanne papillon selon l'une des revendications 1 ou 2, caractérisée en ce qu'une extrémité d'arbre (18) est montée dans un évidement (20) fermé du côté extérieur du corps, et en ce que l'autre extrémité d'arbre (19), munie d'un tourillon de raccordement (24) ou élément similaire, coaxial à l'axe de pivotement (8), est montée dans un évidement continu (21).

Fig. 1

Fig. 2